# EUROPEAN PATENT SPECIFICATION

(11) **EP 4 641 413 B1**
(45) Date of publication and mention of the grant of the patent: **18.11.2026**
(21) Application number: 25171781.5
(22) Date of filing: 22.04.2025
(51) Int. Cl.: G06F 21/32, G06F 21/64, H04L 9/32, H04L 9/00, H04L 9/40

(54) **METHOD AND SYSTEM FOR MANAGING DIGITAL ELEMENTS CONTAINING BIOMETRIC PARAMETERS**
VERFAHREN UND SYSTEM ZUR VERWALTUNG DIGITALER ELEMENTE MIT BIOMETRISCHEN PARAMETERN
PROCÉDÉ ET SYSTÈME DE GESTION D'ÉLÉMENTS NUMÉRIQUES CONTENANT DES PARAMÈTRES BIOMÉTRIQUES

(30) Priority: 22.04.2024 IT 202400009196
(43) Date of publication of application: 29.10.2025
(73) Proprietor: ALAB.TECH S.r.l., 20121 Milano (IT)
(72) Inventor: AGNELLI, Paolo Osvaldo, Milan (IT)
(74) Representative: Murgitroyd & Company

(56) References cited:
- US-A1- 2018 262 493
- US-A1- 2020 092 102
- US-A1- 20240 070 305

## Description

### TECHNICAL FIELD

The present invention relates to a method and system for managing a plurality of digital elements containing biometric parameters reporesentative of biometric characteristics of associated users. Also the present invention relates to methods and systems for certifying the correspondence between a digital element containing biometric parameters and a previously encoded and stored version.

### BACKGROUND ART

The advent of non-fungible tokens (NFTs) has radically changed the landscape of ownership and digital authentication, creating new ways for artists, musicians, and creators to monetize their work. However, this technological innovation arrives at a time when artificial intelligence (Al) is evolving at an unprecedented pace, posing new challenges to traditional creative roles. Al's ability to clone various aspects of an artist-be it facial structure, voice, or posture-creates synthetic replicas capable of imitating performances or generating new content. This increase in Al capabilities has fueled concerns among artists and contributed to discussions on labor controversies.

There have also been recent cases in which these Al capabilities were exploited to attempt to influence political election outcomes: millions of personalized video messages were sent to voters, where a political candidate addressed the voter by name, but the subject in the video was Al-generated based on the candidate's biometric data. The politician featured in the video denied authoring the messages.

This raises the problem of verifying potential "counterfeiting" of biometric parameters, such as voice, facial appearance, or posture. Drawing a parallel to document certification, a third-party entity would be needed to apply a certification and retain an official and "certified" copy of the biometric parameters collection; in our case, a characterization of biometric parameters that are uniquely encoded, registered, and available for future verification.

Any piece of information - whether an email, photograph, contract, or anything else - is the decomposition of a file, a set of numbers generated or stored on an IT system. These source files are typically stored in the digital archives of companies or individuals. These files are inherently modifiable; for instance, an image can be altered using photo editing software, making it indistinguishable from the original. This means a file's content can be artificially modified starting from a source file.

A possible way to certify digital assets is offered by the recent proliferation of Blockchain technology, which allows for secure and immutable storage of digital elements (also called assets). A Blockchain is a communication protocol that identifies a technology based on the logic of distributed databases (i.e., a database not stored on a single server but on multiple interconnected servers, known as nodes).

A Blockchain is a database composed of blocks of transactions linked by timestamps. Each block stores a set of transactions added to the network and confirmed. Every block is connected to the previous one via a cryptographic signature, thus forming a chain. Blocks ensure the integrity and verifiability of the transaction history on a blockchain.

Essentially, a Blockchain constitutes a public and shared ledger, made up of a series of nodes that automatically update on each participating node in the network. Every operation must be confirmed by all individual nodes through cryptographic software, which verifies a set of data defined by a private key used to sign transactions, guaranteeing the digital identity of the authorizing party.

The Blockchain's functioning is not ensured by a central entity; rather, each transaction is validated by the interaction of all nodes. In public blockchains, nodes number in the thousands. Timestamps allow associating a legally valid and certain date and time to a digital document. In other words, timestamps and hashes enable temporal validation of the document that can be enforced against third parties. The hash code is unique to each file, and it is not possible to reverse-engineer the document from the hash, ensuring compliance with privacy regulations (e.g., GDPR). In summary, Blockchain's advantages can be summarized as:
- Reliability
- Confidentiality
- Robustness
- Irrevocability
- Transparency.

However, Blockchain technology also has drawbacks; for example, when used for individual purposes of certification and preservation, it requires technical access and understanding, and currently, implementation and maintenance costs are relatively high.

The purpose of the present invention is to provide a technology that at least partially overcomes the disadvantages of currently available systems.

Documents US 2024/070305A1, US2020/092102A1 and US2018/262493A1 describe various techniques for using blockchain technology and NFTs for user authentication.

### SUMMARY OF THE INVENTION

This result has been achieved, in accordance with the present invention, by implementing a method for managing a plurality of biometric data items with a system comprising at least one server reachable electronically by a plurality of users, the at least one server having access to at least one private registry and to at least one Blockchain, the method comprising the steps of: the at least one server maintaining the plurality of biometric data items in the at least one private registry, each biometric data item being uniquely associated with a registered user and containing one biometric characteristic of the uniquely associated user, the biometric characteristic being represented by a set of biometric parametersencoded with a unique code representative of the set of biometric parameters, the unique code having been recorded on at least one Blockchain, each biometric data item including: a) the unique code representative of the set of biometric parameters associated to the bometric characteristic of the uniquely associated user; b) identification information of the uniquely associated user; c) a link to the at least one blockchain where the unique code is recorded; and d) a contract defining the limits and the conditions of use of the biometric characteristic; the at least one server receiving from a registered user a request to access and use the biometric characteristic of one of the plurality of biometric data items; the at least one server communicating to the requesting user the limits and the conditions of use of the biometric parameters according to the associated contract; responsive to the acceptance of the requesting user of the proposed conditions of use, recording and/or updating the associated existing agreements and obligations. In a preferred embodiment, the contract is a Smart Contract and includes information on existing agreements and obligations.

In a preferred embodiment of the present invention each set of biometric parameters have been previously derived from a reference digital element through the processing of an algorithm A for extracting the set of biometric parameters, the set of extracted biometric parameters having been encoded using an encoding function F which generated the unique code representative of the set of biometric parameters and wherein the request by the user to access and use the biometric characteristic of one of the plurality of biometric data items includes the following steps: the at least one server receiving from the requesting user a reported digital element with at least one set of registered biometric parameters; the at least one server extracting a set of biometric parameters of the reported digital element by executing an algorithm A for extracting a set of biometric parameters, calculating by the at least one server a unique code representative of the set of biometric parameters of the reported digital element, using the encoding function F; checking by at least one server the existence of the same unique code in the at least one private register; responsive to the positive outcome of the check, notifying to the requesting user the correspondence between the biometric parameters of the reported digital element and at least one set of registered biometric parameters and communicating to the user the limits and the conditions of use of the biometric parameters according to the associated contract.

Preferably the set of biometric parameters is embodied in a Non-Fungible Token (NFT). The biometric characteristic cn include several chracteristics, including for example: morphology of the face or part of the face; expression; voice; vocal timbre; posture; characteristic movement; bodily traits, the heartbeat, a genome.

In a preferrred embodiment the unique code is obtained by means of a hash function. Also the step of verifying whether the calculated unique code has been previously registered can include a verification on one or more blockchains (either public or private).

The conditions of use of the associated biometric characteristic can include one or more of: exclusive license; non-exclusive license; transfer of ownership; prohibition of using the associated biometric characteristic. Also the conditions of use can cover various aspects and include economic conditions which must be accepted to receive the authorisation of use the associated biometric characteristic by the uniquely associated user. The absence of conditions of use associated to one of the plurality of biometric data items can be interpreted as prohibition of using the associated biometric characteristic.

In a second aspect of the present invention, a computer program, a software application, or a program product is provided, configured to implement the aforementioned method when executed on a computer, a telephone, or any device equipped with data processing capabilities.

In a further aspect of the present invention, a distributed system is provided, comprising one or more components configured to implement a method for verifying the correspondence of a digital element reported by a registered user with a previously stored profile, as described above.

According to a preferred embodiment, the sets of biometric parameters are encoded and stored in the form of NFTs. The creation of NFTs based on unique biometric data of an artist or individual can offer a beneficial solution for both the technology and entertainment sectors. These NFTs could include facial structure, vocal characteristics, posture, and even unique behavioral traits of an artist or individual. When integrated with contractual rights concerning the image and likeness of the artist, these NFTs act as cryptographic seals that ensure artists automatically receive royalties. This advantage extends not only to artists but also to intermediaries such as agents, managers, and even record labels involved in their work.

According to a further aspect of the present invention, a computer-implemented method is provided for encoding and storing unique biometric parameters for future verification of correspondence with a digital element reported by a user, the method comprising the steps of: receiving a digital element representative of at least one unique characteristic of a user; extracting, using a predetermined algorithm A, a set of biometric parameters representative of a unique characteristic of the user; calculating, by processing an encoding function F, a hash code representative of the set of parameters; recording the hash code on at least one Blockchain and uniquely associating it with the user for future consultation; in response to a request from a user, wherein the request contains at least one reported digital element representative of at least one unique characteristic of the user, extracting by processing the predetermined algorithm A the set of biometric parameters representative of a unique characteristic of the reported digital element and calculating, by using the encoding function F, the hash code representative of the set of parameters; comparing the hash code calculated for the reported digital element with the plurality of previously recorded hash codes; and following a positive outcome of the comparison, notifying the user of the correspondence between the biometric parameters of the reported digital element and at least one set of registered biometric parameters.

A possible implementation of the method according to the present invention could involve transforming an artist's biometric data into objects having easily quantifiable value, thus enabling the claiming and enhancement of ownership over their unique biometric data. In this way, royalties could be generated whenever their image, voice, posture, or other attributes are used, potentially through artificial intelligence systems.

A distributed registry of biometric NFTs could be used, with the owner's consent, to manage a form of single sign-on or universal digital fingerprint.

One of the advantages arising from the present invention is that it allows, at least partially, the exploitation of existing components, thereby limiting the need for investments in dedicated infrastructure.

### BRIEF DESCRIPTION OF THE FIGURES

These and additional advantages, purposes, and features of the present Invention will be better understood by referring to the following description and the attached drawings, which relate to exemplary embodiments provided by way of example and not to be considered limiting, wherein:
- Figure 1 illustrates the general architecture of a system according to a preferred embodiment of the present invention.
- Figure 2 schematically depicts a generic computer used in the system according to a preferred embodiment of the present invention.
- Figure 3 schematically represents the steps involved in the biometric parameter's registration phase, associated with a profile, in a method according to a preferred embodiment of the present invention.
- Figure 4 schematically shows the steps involved in the verification phase of a method according to a preferred embodiment of the present invention.

### DETAILED DESCRIPTION OF EMBODIMENTS OF THE INVENTION

The present invention provides a service and simplified management and access for certified digital items representing biometric data, leveraging Blockchain technology to ensure reliability while relieving the user (whether an individual, private company, or organization) from the complexities associated with directly managing and accessing a Blockchain. Hereinafter, this simplified management and access service will be referred to as the "Service."

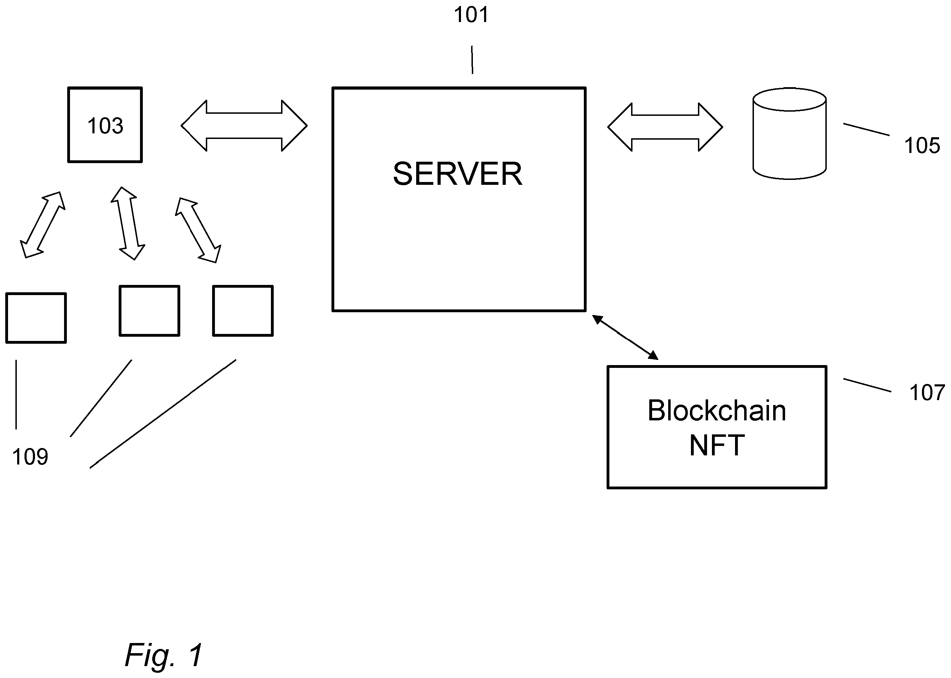

Figure 1 schematically illustrates a preferred embodiment of the present invention. The system includes a server (101) accessible by user (103) through a network (e.g., the INTERNET, mobile telecommunications network). The server (101) is connected to and controls a database (105) and has access to one or more Blockchains (107). All connections are made via telecommunications networks (e.g., INTERNET, mobile networks, internal networks such as LAN for database access).

Communication between the user (103), who, according to a preferred embodiment of the present invention, is preferably registered with the Service, may take place by any means, such as email sent to the Service manager's address. Of course one user 103 is represented, but there can be many different users.

Alternatively, communication may be performed through any available or future digital messaging method (for example, SMS messages, WhatsApp messages, or any other information carrier, such as a photograph taken from a smartphone or audio file formats such as MP3). It is also possible for the acquisition of a digital element (or digital asset), such as a photograph or audio/video recording, to be performed "live," with the user directly providing their image, voice, or movement to the system through an interface (e.g., a video camera and/or microphone) for subsequent processing described below. These communication methods commonly enable the transmission of a digital element or communication of data directly or indirectly to the server. Digital elements (109) transmitted by user (103) to server (101) for processing and storage are illustrated in Figure 1.

Upon receiving a communication (for instance, an email) containing a request from user (103) and a digital element (109) for certification, the server (101) extracts biometric parameters through a predetermined algorithm. Although details of this algorithm are not provided here, numerous suitable software applications (e.g., OpenCV, SciPy, Maho̅ta, Pillow/PIL, SimpleCV) exist. Those skilled in the art will be able to select the most suitable tool for their specific needs. It is critical, however, that the same algorithm is used consistently across various stages of the method according to the invention-both during initial data acquisition and subsequent correspondence verification-to ensure correct identification.

Starting from these biometric parameters, the server calculates a unique code using a predetermined encoding function (e.g., a numerical hash code), uniquely identifying the digital element to be registered. An implementation of the present invention may utilize Non-Fungible Token (NFT) technology. In a preferred embodiment, the server (101) verifies that this hash code does not already exist in database (105). If it does, the server informs the user accordingly. Additionally, there might be scenarios where the user associated with an existing hash code differs from the user requesting registration of a new digital element. Such a scenario indicates potential misuse or attempted misuse of biometric data, with obvious legal implications that are not detailed here. Due to the inherent uniqueness of morphological and biometric traits (such as facial features or voice), and given that hashing algorithms produce distinct hash codes for even minor changes in source files, it is essentially impossible for two sets of biometric parameters from different individuals to generate the same hash code when processed with the same algorithm. Thus, it is essential that the same hashing function is used consistently across registration and correspondence verification phases.

If the hash code is unique (i.e., not found in the registry), server (101) records it for future use in database (105), associating it with additional information such as the requesting user (and the data subject if different), registration date, and time. In a preferred embodiment, the unique code (e.g., hash code) is also sent for recording onto one or more Blockchains to guarantee immutability and to demonstrate the code's correspondence with the associated digital element. Also, a Smart Contract is registered with the unique hash code to provide all details, limits and condition of use for future "use" of the biometric parameters, representing e.g. the voice of an artist. The Smart Contract can include several different options, for example a license.Taking the example of a license it can be exclusive or non-exclusive, lited to a territory or world-wide, permanent, royalty bearing or maybe requiring a one-off payment (or both). Smart Contract are self-executing contracts with the terms of the agreement directly written into the code. They operate on a blockchain, a decentralized and immutable ledger, which ensures transparency and security. Once deployed, a Smart Contract automatically executes the agreed-upon actions when predefined conditions are met, without the need for intermediaries.

In the context of royalty payments, smart contracts can be programmed to automatically distribute royalties to creators or rights holders whenever their digital assets are used or sold. For example, if an artist creates a digital artwork and sells it as an NFT (Non-Fungible Token), a smart contract can be embedded within the NFT that stipulates a percentage of each subsequent sale will be automatically sent to the artist as a royalty.

Here's how it works:
1. **Creation and Deployment:** The artist creates the digital artwork and mints it as an NFT on a blockchain. A smart contract is programmed to include the royalty terms (e.g., 10% of each resale).
2. **Initial Sale:** The NFT is sold to the first buyer. The smart contract records the transaction on the blockchain.
3. **Resales:** When the NFT is resold in the future, the smart contract automatically executes. It transfers the ownership to the new buyer and simultaneously sends the specified royalty percentage to the artist's wallet address.
4. **Transparency and Automation:** All transactions and royalty distributions are recorded on the blockchain, providing a transparent and auditable record. The process is automated, ensuring that royalties are paid accurately and promptly without the need for manual intervention.

This system offers several advantages:
- **Automation:** Eliminates the need for manual tracking and payment of royalties.
- **Transparency:** Provides a clear and verifiable record of all transactions and payments.
- **Efficiency:** Reduces administrative overhead and costs associated with royalty management.
- **Trust:** Ensures that creators are automatically compensated according to the agreed-upon terms.

Smart contracts and blockchain technology are revolutionizing how royalties are managed, offering a more efficient, transparent, and equitable system for creators.

Recording on multiple Blockchains, though not strictly required, provides additional guarantees of reliability and stability. Blockchain nodes may be independently managed and continue operating without central oversight, but technological evolution could cause malfunctions. To mitigate this risk, preferred embodiments of the invention simultaneously record data onto multiple Blockchains.

As mentioned, according to a preferred embodiment of the present invention, the unique code is generated, for instance, by employing hash techniques. A hash algorithm processes any amount of bits (referred to in computer science as "raw" data). These algorithms represent a family of functions meeting the following requirements:
- The algorithm outputs a string composed of numbers and letters derived from any bit stream of arbitrary size (it can be a file or a simple text string). This output is referred to as a digest.
- The algorithm is irreversible, meaning it is not possible to reconstruct the original document from the output digest. This characteristic makes the algorithm a one-way function. However, this one-way property is not essential when hash functions are used merely for error-checking in data transfers, as any encryption (secrecy) requirements can be handled by other parts of the protocol.

Therefore, from any given file, it is possible to uniquely extract a digest, i.e., a data sequence uniquely representing the document itself. Altering even a single bit of the document (file) will change the resulting unique data sequence. In this specific scenario, the "document" being encoded is the set of biometric parameters extracted from a digital element (e.g., a photograph, video, or audio recording), creating a sort of "digital fingerprint" which is stored and later compared with digital elements submitted to the system by a user to verify correspondence with the previously registered parameters. Practically, if a user suspects having been "digitally cloned," or believes someone has cloned the biometric characteristics of a profile they manage (e.g., of a deceased singer or someone who has transferred digital rights), they can request the system to verify this correspondence.

The Service, according to a preferred embodiment of the present invention, is intended to store on the Blockchain (a secure and immutable system) the digest calculated from the file containing the document, namely the digital source of the document itself. Clearly, the algorithm used to calculate the hash code must consistently remain the same to allow for future verification of correspondence. The Service can be utilized to irrevocably archive the digest of a file, making it possible to verify this digest at a later stage.

For certification purposes, the Service would not need to store a a copy of the file itself (static image, video, audio), but only its digital transformation algorithm and its fingerprint (digest). This strengthens its compliance with privacy regulations. However to provide the option of searching the "catalogue" and selecting a biometric characteristic (e.g. the voice of an artist), the voice must be replicable for the licensee (in the exampe of a license) using the transformation algorithm.

As mentioned above, a possible evolution of the system described here involves the use of the NFT concept to create a catalog of digital "assets" that can be commercialized, exchanged, licensed, or simply used to verify potential unauthorized usage. Later on, we will present some considerations on a possible commercial and technological structure that leverages this revolutionary concept.

At this stage, we describe the method and the system according to a preferred implementation of the present invention, which allows for the encoding and storage of a person's profile using their unique biometric parameters. This would then enable searching for and verifying matches with digital elements reported by a user (who may be the person themselves or an agent/representative/successor in title) wishing to verify and demonstrate any unauthorized use of previously recorded biometric characteristics (for example, the use of facial appearance, eyes, voice, posture, or walking style and other distinctive personal movements). Also, the Service can be used to request a licence or other way of "using" the biometric characteristic.

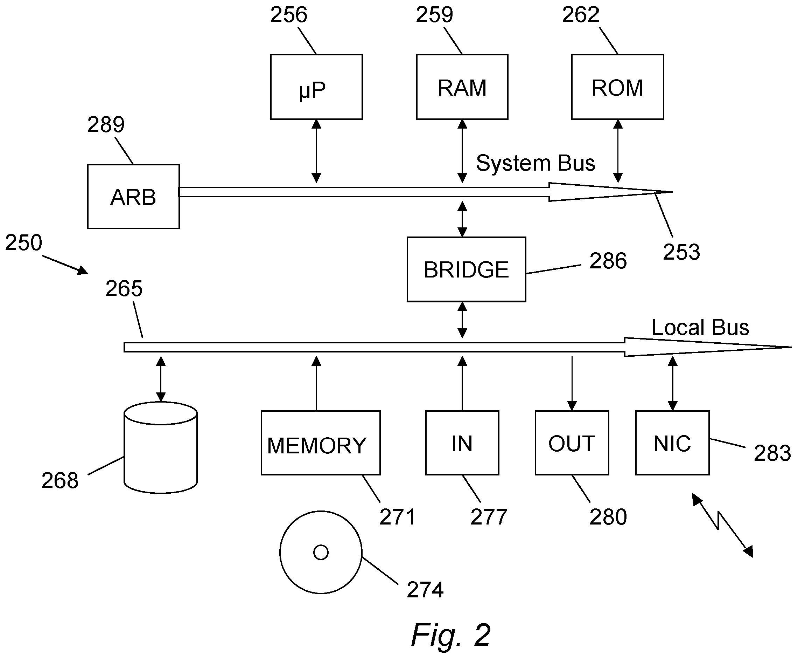

Figure 2 illustrates a generic computer used in the system according to the preferred embodiment of the present invention. This generic description encompasses any equipment with processing capabilities, albeit with varying levels of sophistication and functionality (e.g., computers, mobile terminals, tablets, smartphones, servers, network routers, proxy servers).

Computer 250 is composed of several units connected in parallel to a system bus 253. Specifically, one or more microprocessors 256 control the operations of the computer; RAM 259 is directly used as working memory by the microprocessors 256, while ROM 262 contains the basic code for the system's initial boot operations.

Various peripheral units are connected to a local bus 265 through appropriate interfaces. These peripheral units may include mass storage such as a hard disk 271 and a reader for memory cards, USB drives, CD-ROMs, and/or optical discs (e.g., DVD or Blu-ray) 274. Other storage devices may be used by computer 250, including remote memories, such as those in a cloud environment.

Additionally, computer 250 may include input devices 277 (e.g., keyboard, mouse, trackpoint, webcam) and output devices 280 (e.g., display, printer). A Network Interface Card (NIC) 283 is used to connect computer 250 to a network. A bridge unit 286 serves as the interface between the system bus 253 and the local bus 265.

Each microprocessor 256 and the bridge unit 286 can operate as a "master agent" and request exclusive access to the system bus 253 to transmit information. An arbiter 289 manages requests for access to the system bus 253, preventing conflicts between the requesting units.

Similar considerations apply to slightly different systems or those based on alternative network configurations. Additional components beyond those described here may be present in specific cases and for implementations.

The business model could involve payment for each certified digest (inserted/verified) through the Service. The business model could be extended based on the type of channel used-e.g., email, API, etc.-and/or in relation to the accessibility of the digest over different time periods (e.g., 24 months).

Verification in database 105 of the existence and certification of a file previously certified with the Service can only occur through the Service itself.

### BLOCKCHAIN

As briefly mentioned above, Blockchain technology offers the following features:
Reliability: Blockchain is reliable. Since it is not governed by a central authority but instead grants all direct participants a degree of control over the entire chain, Blockchain becomes a less centralized, less governable system and, at the same time, much more secure and reliable-especially against malicious attacks. In fact, if only one of the nodes in the chain is attacked and compromised, all other nodes in the distributed database will remain active and operational, thereby preserving the integrity of the chain and preventing the loss of important information.

Transparency: Transactions carried out through the Blockchain are visible to all participants, thus ensuring transparency in operations.

Cost-effectiveness: Carrying out transactions via Blockchain is cost-effective for all participants, as it eliminates the need for third-party intermediaries-typically required in conventional transactions between two or more parties (such as banks and similar entities).

Immutability: Information already entered into the Blockchain cannot be modified in any way. As a result, the information contained within the Blockchain is more solid and reliable, precisely because it cannot be altered and therefore remains exactly as it was originally recorded.

Irrevocability: With Blockchain, it is possible to carry out irrevocable transactions, which are also easier to trace. This ensures that transactions are final, with no possibility of being modified or cancelled.

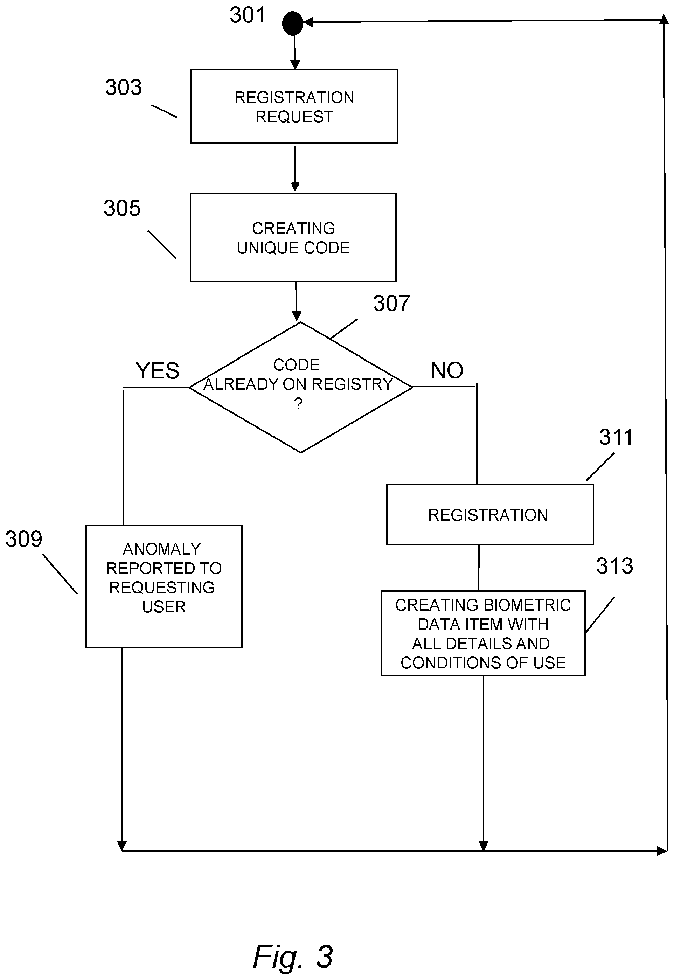

The diagram in Figure 3 schematically illustrates the sequence of steps in the profile registration phase of the method (or process) according to a preferred embodiment of the present invention. The method aims to certify biometric parameters (at least one set of biometric parameters, but potentially more) associated with a profile-and thus with a user-in order to later verify a match with a received digital element.

The steps shown in Figure 3 specifically refer to a preliminary phase: the registration (following encoding) of profiles containing at least one set of biometric parameters. This phase constitutes a prerequisite for the subsequent verification phase.

As explained with reference to Figure 1, server 101 must have access to a private registry, saved for example on a database (see database 105 in Figure 1), and to at least one Blockchain (represented as 107 in Figure 1).

The process begins at step 301, in which server 101 is prepared to receive a new registration request. A user-preferably, but not necessarily, a registered one (represented by box 103 in Figure 1)-sends server 101 a request for the certification of at least one set of biometric parameters to be encoded and stored in a profile associated with a person (step 303). The user making such a request may not necessarily be the person whose profile is being created. In this case, legal issues must clearly be addressed concerning the identity and legitimacy of such a registration and the related use of the person's image, voice, or other uniquely associated characteristics.

These legal issues include moral rights (which are inalienable according to most Laws around the World), which are not addressed in this document. The request must contain: at least one digital element (e.g., a photo of the face, a video of the gait, an audio recording of the voice) in a format selected from a plurality of predetermined formats via a specific algorithm, and the necessary information to uniquely associate the generated profile with a physical person. This physical person may also be deceased, but it must still be possible to establish a match. Again, we do not go into detail regarding the legal issues associated with such verification.

Although not shown in the figure, it is foreseen that a previously registered user may wish to encode and store an additional set of biometric parameters for the same person, associating it with an already existing profile (for example, to encode and register biometric parameters representing the face image, in addition to those already registered for the voice).

In a preferred embodiment of the present invention, the request is sent via email, but any other communication method suitable for being received, interpreted, and processed by a server is equally acceptable. By way of example, this could include a form submitted through a website, a message (e.g. a WhatsApp message), a photo taken-even in real-time-using a digital device (e.g., a smartphone), through a dedicated App.

The document itself can also take various forms and formats (e.g., a PDF document, a Word document, a photo, a sound file, and many others that experts in the field can envision).

At this point, the server (step 305) extracts a set of biometric parameters linked to the received digital element. The set of biometric parameters is extracted from the digital element using a predetermined algorithm, hereinafter referred to as Algorithm A, which is capable of extracting, from each digital element (e.g., a photo of a face), the same series of information (parameters) that would be extracted from any version of the same element-for example, from any photo of the corresponding person's face.

In other words, the biometric parameters extracted must always be the same for every instance related to the same physical person. Taking the example of a facial image, any photograph depicting that person, regardless of pose or condition, should yield the same results (i.e., the same extracted parameters) when processed by Algorithm A. We can imagine the same person being portrayed in different poses, with different expressions (e.g., smiling, crying, or serious), with or without accessories (e.g., with or without a beard, glasses, or a hat): the processing of all these images, using existing technological algorithms, should yield the same set of biometric parameters.

These algorithms process the raw input data (e.g., facial images) and, through appropriate extrapolation, define unique parameters of the face. Such algorithms are widely used in everyday life-for instance, facial recognition for unlocking smartphones.

It may be necessary-or advisable-to provide multiple instances of the same digital element (e.g., multiple photos of the same face or different poses if captured "live," as previously described), in order to "train" the system more precisely. Alternatively, the system itself may request a repetition or submission of additional instances, should the initial one not be sufficiently clear to reliably determine the biometric parameters.

The parameters are then transformed into a unique code which is recorded-for example-in registry 105 for future verification. In a preferred embodiment of the present invention, this code is generated by means of a hash function (hereinafter referred to as Function F), which, as is well known, generates a code uniquely associated with the original document.

Optionally, before recording it, the code thus generated is used by the server to check whether an identical code already exists in its records; if so, it would indicate that the same set of biometric parameters had already been registered through the Service. The server 101 therefore accesses at least one private registry to verify whether the computed unique code has already been previously recorded in such registry (step 307).

If the code is found, the server notifies (step 309) this "anomaly" to the user making the registration request and, where possible, to the user who had previously performed the existing registration. Once again, legal implications and consequences of such an "anomaly" are not addressed in this document.

If the code is not found (i.e., it is a new profile), the server 101 proceeds to register (step 311) the unique code on one or more Blockchains, associating it with a profile that identifies the physical person to whom the biometric parameters belong, and adds to the private registry (105) a record containing:
- the unique code itself,
- the identifying details of the person indissolubly associated with the profile,
- if different from the above, the identifying details of the user requesting the registration,
- the identifying details of the one or more Blockchains used,
- the date of registration on the Blockchain(s)
- (optional) a Smart Contract defining the limits and the conditions of use of the associated characteristic. Also, stored with the Smart Contract, it is possible to record any current or future agreement of partial use (e.g. the authorisation of using the biometric charcateristic in one single country). In a possible implementation, the lack of a Smart Contract will be considered by the Service as a total prohibition of using the associated biometric characteristic.

As mentioned, when registering a biometric data item, a Smart Contract can be created and associated with it. This ensures that the use of the biometric data is governed by predefined, transparent, and automated rules. The user requesting the registration is required to provide detailed information about this Smart Contract.

The Smart Contrat can include the following details:
- Parties Involved: Full legal names and contact information of all parties involved, including the artist/creator, any agents or representatives, and any other relevant entities. This ensures clarity on who holds rights and responsibilities.
- Biometric Data Description: A precise description of the biometric data being registered, including technical specifications and any unique identifiers. This ensures accurate identification and management of the specific data.
- Royalty Percentage and Structure: The exact percentage or structure of royalty payments due to the creator for each use of the biometric data. This should include details on how royalties are calculated and any tiered structures.
- Payment Frequency and Method: How often royalty payments will be distributed (e.g., monthly, quarterly) and the method of payment (e.g., cryptocurrency transfer to a specific wallet address). This ensures timely and efficient payment.
- Usage Rights and Restrictions: A clear and comprehensive definition of how the biometric data can be used, including any specific limitations, regions of use, or types of applications. This protects the creator's rights and prevents unauthorized usage.
- Duration of Contract and Renewal Terms: The length of time the smart contract and royalty agreement are valid, and any conditions for renewal or termination. This provides a clear timeframe for the agreement.
- Dispute Resolution Mechanism: A defined process for handling any disagreements or disputes that may arise regarding the use of the biometric data or royalty payments. This ensures a fair and efficient resolution process.
- Technical Specifications of the Smart Contract: Details on the platform where the smart contract will be deployed (e.g., Ethereum, Polygon), the contract address, and any relevant code or scripts. This ensures technical transparency and verifiability.

These details should make sure that the Smart Contract accurately reflects the agreement between all parties and automates the management and payment of royalties. This system offers transparency, efficiency, and trust, protecting the rights of the creator and streamlining the process of using biometric data. According to a possible implementation we might assume that the lack of any indication of conditions of use implies that the owner of the biometric characteristic (e.g. the artist whose voice is being registered) does not allow any use or exploitation of the biometric characteristic, therefore the only condition of use us a total prohibition of using the characteristic itself any any use will be considered not authorised by the owner.

The server then (step 313) sends the user who submitted the request a confirmation of the certification. Control then returns to step 301, awaiting new requests.

The Service now can offer the users the possibility of searching the registered biometric data and request access and use of such data (these steps are not shown on Figure 3). The requesting user will be offered the option of accepting the rules set by the associated Smart Contract and receive an autorisation of use, e.g. a non-exclusive license under certain condition of use (if, of course compatible with pre-existing commitments). The new agreement and obligations can be recorded together with the Smart Contract and these obligations will limit and condition possible future similar requests. To make an example if the use of the voice of an artist is exclusivey licensed to a previous Licensee in a Country_A (i.e. a territorial limited exclusive license), all other users will be able to request the use of the voice in other countries, but not in Country_A.

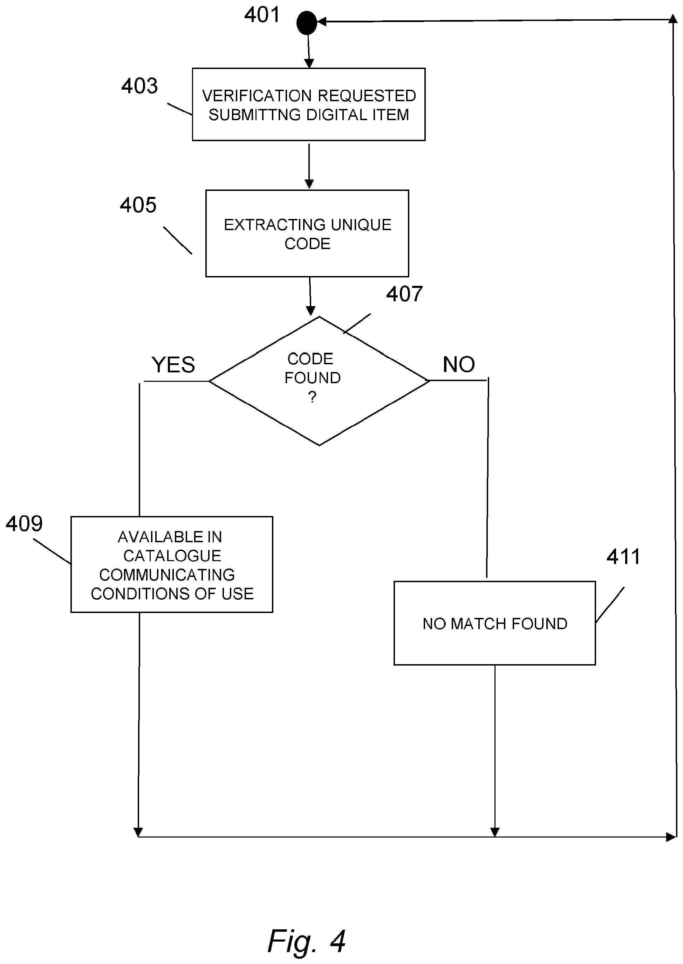

The diagram in Figure 4 schematically illustrates the sequence of steps of an alternative method (or process) according to an embodiment of the present invention. In this phase, the system is requested to verify a match between a digital element provided by a user and a set of biometric parameters previously encoded and recorded.

The verification phase of the method begins at step 401, in which the server waits to receive a new request. It is noted that step 401 could correspond to step 301 previously described, and a mechanism can be implemented to allow the system to determine whether it is receiving a new registration request or a verification request

A registered user (represented by box 103 in Figure 1) sends server 101 a verification request for at least one digital element 109 (step 403). The request must contain at least one digital element (e.g., a photo, video, or audio recording) in a format selected from a plurality of predetermined formats.

In a preferred embodiment of the present invention, the request is sent via email, but any other communication method suitable for being received, interpreted, and processed by a server is equally acceptable. By way of example, this could include a form filled out on a website, a message (e.g. a WhatsApp message), or a photo captured with a digital device (e.g., a smartphone).

The document may also take on various forms and formats (e.g., PDF document, Word document, photo, audio file, and numerous others that those skilled in the art may envision).

At this point, the server (step 405) extracts the set of biometric parameters from the received digital element. The set of biometric parameters is extracted using the same Algorithm A that was used during the registration phase. This identity of algorithms is, of course, essential for the proper execution and accurate verification of correspondence.

As explained above, the biometric parameters extracted must always be the same for every instance related to the same physical person. In other words, using the facial image example again, any photograph depicting that person in different poses or conditions must yield the same results (i.e., the same extracted parameters) when processed by the same algorithm.

Similar to what was discussed for the registration phase, it is critical that recognition occurs independently of the specific conditions under which the digital element was "captured." Returning to the facial recognition example, the system must be able to recognize the person even when portrayed with different poses, facial expressions (e.g., smiling, crying, or neutral), or accessories (e.g., with or without a beard, with or without glasses, with or without a hat): processing all such images must yield the same set of biometric parameters.

A hash code is then calculated from the extracted set of biometric parameters. The generation of this hash code must also be performed using the same Function F used during the registration phase.

The server 101 then accesses at least one private registry to verify whether the unique code has already been previously registered in such registry (step 407).

If a match is found, the server reports (step 409) that the biometric characteristic does exists in the "catalogue" and it is available under certain conditions detailed in the associated Smart Contract (or on the contrary it is not possible to make any use of such bioemtric chracteristic). Once again, the legal aspects and implications of such alleged counterfeiting are not addressed in this document.

If the code is not found, the server 101 communicates the negative result of the search (step 411).

Let us consider a hypothetical case study involving a music legend and cultural icon: Elvis Presley. Imagine if an NFT were created encompassing Elvis's vocal characteristics, facial structure, and signature moves.

Every time Al technology uses this data to generate a "new" Elvis performance, a smart contract would automatically channel royalties to the rightful beneficiaries, ensuring that the legacy of the legend continues to generate revenue long after his passing.

### CHARACTERISTICS OF AN NFT CATALOG REPRESENTING BIOMETRIC PARAMETERS

- Identification: The process begins by identifying the artist or individual willing to create a biometric NFT. Verification methods could include traditional identification means such as passports, or more modern solutions like decentralized identity documents.
- Rights and Privacy: A comprehensive legal framework would be required, defining the rights associated with the NFT and clarifying the terms of data usage and privacy.
- Data Acquisition: High-precision devices-such as advanced smartphone cameras or facial scanning technologies-would be used to collect biometric data, including facial features, posture analysis, and voice recordings.
- Token Creation: The collected biometric data, together with a legal contract specifying usage terms and royalties, is minted into a unique NFT using blockchain standards such as ERC-721 or ERC-1155.
- Transaction: The minted NFT can then be traded, sold, or licensed. Smart contracts ensure that whenever the NFT or the biometric data it encapsulates is used, royalties are automatically credited to the artist and other relevant stakeholders.
- Involved Platforms: Blockchain platforms such as Ethereum, Solana, or Polygon could be ideal for implementing this concept, given their existing NFT infrastructure. Specialized DApps (decentralized applications) could manage the entire workflow-from data acquisition to NFT minting and royalty distribution.
- Ethical and Legal Considerations
- Data Security: Protecting sensitive biometric data is critical. The use of advanced encryption algorithms would be non-negotiable to ensure data integrity.
- Ownership Transfer: Special legal clauses should be incorporated to define the conditions under which the NFT may be sold or transferred.
- Insurances: Specific insurance could be related to the NFT.
- Jurisdictional Issues: Navigating international laws on data protection and intellectual property would be essential, considering the global nature of NFTs and digital assets.

### ADVANTAGES OF A BIOMETRIC PARAMETERS NFT CATALOG

- Artist Empowerment: Artists regain control over their image and creative output.
- Transparency: The use of blockchain ensures a transparent and verifiable system for royalty distribution.
- Innovation: Encourages ethical collaboration between artificial intelligence and artists.
- Revenue Streams: Creates new financial opportunities for artists, agents, and platforms facilitating these NFTs.
- Compliance: Aligns with Al regulations (Al ACT) and GDPR, since only the algorithm's output is stored-not the raw biometric data acquired.

### HOW BIOMETRIC NFTS COULD BE SOLD

- Auctions: One of the most popular methods for selling high-value NFTs is through auctions. Platforms like OpenSea or Rarible could host auctions for biometric NFTs, offering artists the opportunity to maximize their earnings based on demand.
- Fixed-Price Sales: Alternatively, a fixed-price model could also work-particularly for emerging artists who may not yet have the recognition to attract high-stakes bidders.
- Royalty Sharing: For both sales methods, smart contracts can ensure that a portion of each resale goes back to the original artist. This provides potential for long-term income, not just a one-time payment.
- Licensing Agreements: For the commercial use of the artist's biometric data by third parties-such as film studios or advertising agencies-licensing agreements can be embedded into the NFT's smart contract. This enables the automated distribution of royalties whenever the biometric data is used.
- Bundling with Other Artwork: Artists can also bundle their biometric NFTs with other digital art or music NFTs as part of a complete package. This approach could appeal to fans interested in owning a holistic representation of the artist's creative expression.
- Bundling with Insurance: Artists can also bundle their biometric NFTs with other digital art or music NFTs with an insurance as part of a complete package. This approach could increase NTF value.

### MARKET OPPORTUNITIES

- Direct-to-Consumer Sales: Artists often have dedicated fan bases willing to pay a premium for exclusive content. Biometric NFTs could be sold directly to consumers, eliminating intermediaries and maximizing revenue.
- Collectibles Market: As seen with sports memorabilia and celebrity merchandise, there is a massive market for collectibles. Biometric NFTs add a new, digitally native layer to this existing market.
- Posthumous Revenue: For estates managing the legacy of deceased artists, biometric NFTs offer a way to continue generating income long after an artist's lifetime.
- Integration with Virtual Reality (VR) and Augmented Reality (AR): The use of biometric data in increasingly sophisticated virtual worlds introduces a whole new level of interaction-and with it, new avenues for monetization.
- Big Data and Analytics Companies: Companies focused on analytics may find value in aggregated and anonymized data about which artist biometric traits are most in demand, opening new paths for marketing and advertising partnerships.
- Celebrity Endorsements: High-profile celebrities adopting biometric NFTs could drive trends and boost market demand, much like early crypto endorsements helped push mainstream adoption.
- Authentication Systems: Such as entry badges, KYC services, and more.

The market potential for biometric NFTs is vast, ranging from direct-to-consumer sales to multimillion-dollar licensing deals in the advertising and entertainment industries. With the convergence of blockchain, artificial intelligence, and the creative arts, we are witnessing the emergence of a multi-billion-dollar market. Early adopters-whether artists, technology platforms, or investors-stand to benefit significantly from this flourishing ecosystem.

As artists strive to retain control and fair compensation in an era increasingly dominated by artificial intelligence and machine learning, biometric NFTs offer a transformative solution. By safeguarding artists' unique features as a form of digital property, this revolutionary concept could have a profound impact on how value is distributed in the worlds of entertainment and art in the years to come. The fusion of NFTs and biometric data marks a turning point in the evolving relationship between technology and the creative arts. This innovative concept offers a balanced path, reconciling the relentless march of technological progress with the human right to fair compensation and recognition. As Al continues to challenge and redefine traditional roles in the creative arts, this approach could serve as a defining model for how we handle ownership, value, and innovation in the digital age.

Through the system and method of the present invention, it is possible to create a flexible and user-friendly service ("Service") that allows a private user, a company, or an industry to leverage the reliability and robustness of blockchain technology without needing to manage the complex integration and operational processes directly.

The Service may require the development of software components to be embedded in existing applications (e.g., messaging systems, camera apps, etc.) in order to easily notarize digital information. For example, a photo taken with a smartphone running the appropriate app could transmit the image file to the blockchain along with additional metadata (such as GPS location) and then receive a certificate to attach to the image, thereby making it unique-following the Non-Fungible Token (NFT) principle.

In practice, the specific implementation details may vary in equivalent ways concerning the individual constructive elements described and illustrated, without departing from the scope of protection granted by the appended claims.

A person skilled in the art may make numerous modifications to the solution described above to meet local or specific requirements.

In particular, it should be understood that, even though implementation details have been provided with reference to one or more preferred embodiments, certain characteristics or steps of the method described may be omitted, replaced, or varied to suit design or implementation needs.

For example, hardware structures may take different forms or include various modules; the term computer encompasses any device (e.g., phones, handhelds) equipped with computing capabilities to execute software programs or parts thereof. Programs may be structured differently or implemented in any suitable form. Likewise, memories may take various forms or be replaced by equivalent entities (not necessarily made of tangible media). Programs may take any form suitable for performing the related functions and may be written in any programming language, or presented as software, firmware, or microcode, in either object code or source code.

The programs themselves may be stored on any computer-readable medium; for example, media may include hard disks, removable disks (e.g., CD-ROM, DVD, or Blu-ray Disc), memory cards, USB drives, wireless connections, cloud systems, networks, or telecommunication waves. Such media may be electronic, magnetic, optical, electromagnetic, mechanical, infrared, or semiconductor based.

In any case, the solution according to the present invention is suitable for implementation via software, hardware (including integration into chips or semiconductor materials), or a combination of both.

## Claims

1. Method for managing a plurality of biometric data items with a system comprising at least one server reachable electronically by a plurality of users, the at least one server having access to at least one private registry and to at least one Blockchain, the method comprising the steps of:
- the at least one server maintaining the plurality of biometric data items in the at least one private registry, each biometric data item being uniquely associated with a registered user and containing one biometric characteristic of the uniquely associated user, the biometric characteristic being represented by a set of biometric parameters, encoded with a unique code representative of the set of biometric parameters, the unique code having been recorded in at least one Blockchain; each biometric data item including: a) the unique code representative of the set of biometric parameters associated to the biometric characteristic of the uniquely associated user; b) identification information of the uniquely associated user; c) a link to the at least one blockchain where the unique code is recorded; and d) a contract defining the limits and the conditions of use of the biometric characteristic;
- the at least one server receiving from a user a request to access and use the biometric characteristic of one of the plurality of biometric data items;
- the at least one server communicating to the requesting user the limits and the conditions of use of the biometric parameters according to the associated contract;
- responsive to the acceptance of the requesting user of the proposed conditions of use, including agreements and/or obligations, recording and/or updating the associated existing agreements and obligations.

2. . The method of claim 1 wherein the contract is a Smart Contract.

3. The method of claim 1 or 2 wherein each set of biometric parameters have been previously derived from a reference digital element through the processing of an algorithm A for extracting the set of biometric parameters, the set of extracted biometric parameters having been encoded using an encoding function F which generated the unique code representative of the set of biometric parameters and wherein the request by the user to access and use the biometric characteristic of one of the plurality of biometric data items includes the following steps:
- the at least one server receiving from the requesting user a reported digital element with at least one set of registered biometric parameters;
- the at least one server extracting a set of biometric parameters of the reported digital element by executing an algorithm A for extracting a set of biometric parameters,
- calculating by the at least one server a unique code representative of the set of biometric parameters of the reported digital element, using the encoding function F;
- checking by at least one server the existence of the same unique code in the at least one private register;
- responsive to the positive outcome of the check, notifying to the requesting user the correspondence between the biometric parameters of the reported digital element and at least one set of registered biometric parameters and communicating to the user the limits and the conditions of use of the biometric parameters according to the associated contract.

4. Method according to one of the previous claims wherein each set of biometric parameters is embodied in a Non-Fungible Token (NFT).

5. Method according to any preceding claim wherein the biometric characteristic comprises one of: morphology of the face or part of the face; expression; voice; vocal timbre; posture; characteristic movement; bodily traits, the heartbeat, a genome.

6. Method according any preceding claim, wherein the unique code is obtained by means of a hash function.

7. Method according to any preceding claim, wherein the step of verifying whether the calculated unique code has been previously registered includes a verification on one or more blockchains.

8. Method according to any preceding claim, wherein the conditions of use of the associated biometric characteristic includes one or more of: exclusive license; non-exclusive license; transfer of ownership; prohibition of using the associated biometric characteristic.

9. Method according to claim 8 wherein the conditions of use include economic conditions which must be accepted to receive the authorisation of use the associated biometric characteristic by the uniquely associated user.

10. Method according to claim 8 or 9 wherein the absence of conditions of use associated to one of the plurality of biometric data items is to be interpreted as prohibition of using the associated biometric characteristic.

11. Method according to any preceding claim wherein the at least one blockchain include a private Blockchain.

12. Method according to any preceding claim wherein the at least one blockchain include a public Blockchain.

13. A computer program comprising digital code means adapted to perform the steps of the method according to any preceding claim, when run on a computer.

14. A distributed system comprising one or more components adapted to implement a method, according to one of claims 1 to 12.

## Patentansprüche

1. Ein Verfahren zum Verwalten einer Vielzahl von biometrischen Datenelementen mit einem System, das mindestens einen Server beinhaltet, der von einer Vielzahl von Benutzern elektronisch erreichbar ist, wobei der mindestens eine Server Zugriff auf mindestens ein privates Register und auf mindestens eine Blockchain hat, wobei das Verfahren die folgenden Schritte beinhaltet:
- wobei der mindestens eine Server die Vielzahl von biometrischen Datenelementen in dem mindestens einen privaten Register vorhält, wobei jedes biometrische Datenelement eindeutig mit einem registrierten Benutzer assoziiert ist und ein biometrisches Merkmal des eindeutig assoziierten Benutzers enthält, wobei das biometrische Merkmal durch einen Satz von biometrischen Parametern repräsentiert wird, der mit einem eindeutigen Code codiert ist, der für den Satz von biometrischen Parametern repräsentativ ist, wobei der eindeutige Code in mindestens einer Blockchain aufgezeichnet wurde; wobei jedes biometrische Datenelement Folgendes umfasst: a) den eindeutigen Code, der für den Satz von biometrischen Parametern repräsentativ ist, der mit dem biometrischen Merkmal des eindeutig assoziierten Benutzers assoziiert ist; b) Identifikationsinformationen des eindeutig assoziierten Benutzers; c) eine Verknüpfung mit der mindestens einen Blockchain, in der der eindeutige Code aufgezeichnet ist; und d) einen Vertrag, der die Grenzen und die Nutzungsbedingungen des biometrischen Merkmals definiert;
- wobei der mindestens eine Server von einem Benutzer eine Anforderung zum Zugriff auf und zur Nutzung des biometrischen Merkmals eines der Vielzahl von biometrischen Datenelementen empfängt;
- wobei der mindestens eine Server dem anfordernden Benutzer die Grenzen und die Nutzungsbedingungen der biometrischen Parameter gemäß dem assoziierten Vertrag mitteilt;
- als Reaktion auf die Annahme der vorgeschlagenen Nutzungsbedingungen durch den anfordernden Benutzer, einschließlich Vereinbarungen und/oder Verpflichtungen, Aufzeichnen und/oder Aktualisieren der assoziierten bestehenden Vereinbarungen und Verpflichtungen.

2. Verfahren gemäß Anspruch 1, wobei der Vertrag ein Smart Contract ist.

3. Verfahren gemäß Anspruch 1 oder 2, wobei jeder Satz von biometrischen Parametern zuvor von einem digitalen Referenzelement durch die Verarbeitung eines Algorithmus A zum Extrahieren des Satzes von biometrischen Parametern abgeleitet wurde, wobei der Satz von extrahierten biometrischen Parametern unter Verwendung einer Codierfunktion F codiert wurde, die den eindeutigen Code erzeugt hat, der für den Satz von biometrischen Parametern repräsentativ ist, und wobei die Anforderung durch den Benutzer zum Zugriff auf und zur Nutzung des biometrischen Merkmals eines der Vielzahl von biometrischen Datenelementen die folgenden Schritte umfasst:
- wobei der mindestens eine Server von dem anfordernden Benutzer ein gemeldetes digitales Element mit mindestens einem Satz von registrierten biometrischen Parametern empfängt;
- wobei der mindestens eine Server einen Satz von biometrischen Parametern des gemeldeten digitalen Elements durch Ausführen eines Algorithmus A zum Extrahieren eines Satzes von biometrischen Parametern extrahiert,
- Berechnen eines eindeutigen Codes, der für den Satz von biometrischen Parametern des gemeldeten digitalen Elements repräsentativ ist, durch den mindestens einen Server unter Verwendung der Codierfunktion F;
- Prüfen durch mindestens einen Server des Vorhandenseins desselben eindeutigen Codes in dem mindestens einen privaten Register;
- als Reaktion auf das positive Ergebnis der Prüfung, Benachrichtigen des anfordernden Benutzers über die Übereinstimmung zwischen den biometrischen Parametern des gemeldeten digitalen Elements und mindestens einem Satz von registrierten biometrischen Parametern und Mitteilen der Grenzen und der Nutzungsbedingungen der biometrischen Parameter gemäß dem assoziierten Vertrag an den Benutzer.

4. Verfahren gemäß einem der vorhergehenden Ansprüche, wobei jeder Satz von biometrischen Parametern in einem Non-Fungible Token (NFT) verkörpert ist.

5. Verfahren gemäß einem der vorhergehenden Ansprüche, wobei das biometrische Merkmal eines der Folgenden beinhaltet: Morphologie des Gesichts oder eines Teils des Gesichts; Ausdruck; Stimme; Stimmtimbre; Haltung; charakteristische Bewegung; körperliche Eigenschaften, den Herzschlag, ein Genom.

6. Verfahren gemäß einem der vorhergehenden Ansprüche, wobei der eindeutige Code mittels einer Hash-Funktion erhalten wird.

7. Verfahren gemäß einem der vorhergehenden Ansprüche, wobei der Schritt des Verifizierens, ob der berechnete eindeutige Code zuvor registriert wurde, eine Verifizierung auf einer oder mehreren Blockchains umfasst.

8. Verfahren gemäß einem der vorhergehenden Ansprüche, wobei die Nutzungsbedingungen des assoziierten biometrischen Merkmals eines oder mehrere der Folgenden umfassen: exklusive Lizenz; nicht-exklusive Lizenz; Eigentumsübertragung; Verbot der Nutzung des assoziierten biometrischen Merkmals.

9. Verfahren gemäß Anspruch 8, wobei die Nutzungsbedingungen wirtschaftliche Bedingungen umfassen, die angenommen werden müssen, um die Genehmigung zur Nutzung des assoziierten biometrischen Merkmals durch den eindeutig assoziierten Benutzer zu erhalten.

10. Verfahren gemäß Anspruch 8 oder 9, wobei das Fehlen von Nutzungsbedingungen, die mit einem der Vielzahl von biometrischen Datenelementen assoziiert sind, als Verbot der Nutzung des assoziierten biometrischen Merkmals zu interpretieren ist.

11. Verfahren gemäß einem der vorhergehenden Ansprüche, wobei die mindestens eine Blockchain eine private Blockchain umfasst.

12. Verfahren gemäß einem der vorhergehenden Ansprüche, wobei die mindestens eine Blockchain eine öffentliche Blockchain umfasst.

13. Ein Computerprogramm, das digitale Codemittel beinhaltet, die angepasst sind, um die Schritte des Verfahrens gemäß einem der vorhergehenden Ansprüche durchzuführen, wenn sie auf einem Computer ausgeführt werden.

14. Ein verteiltes System, das eine oder mehrere Komponenten beinhaltet, die angepasst sind, um ein Verfahren gemäß einem der Ansprüche 1 bis 12 zu implementieren.

## Revendications

1. Procédé pour gérer une pluralité d'items de données biométriques avec un système comprenant au moins un serveur joignable électroniquement par une pluralité d'utilisateurs, l'au moins un serveur ayant accès à au moins un registre privé et à au moins une chaîne de blocs, le procédé comprenant les étapes :
- de maintien par l'au moins un serveur de la pluralité d'items de données biométriques dans l'au moins un registre privé, chaque item de données biométriques étant associé de manière unique à un utilisateur enregistré et contenant une caractéristique biométrique de l'utilisateur associé de manière unique, la caractéristique biométrique étant représentée par un ensemble de paramètres biométriques, encodé avec un code unique représentatif de l'ensemble de paramètres biométriques, le code unique ayant été inscrit dans au moins une chaîne de blocs ; chaque item de données biométriques incluant : a) le code unique représentatif de l'ensemble de paramètres biométriques associé à la caractéristique biométrique de l'utilisateur associé de manière unique ; b) des informations d'identification de l'utilisateur associé de manière unique ; c) un lien vers l'au moins une chaîne de blocs où le code unique est inscrit ; et d) un contrat définissant les limites et les conditions d'utilisation de la caractéristique biométrique ;
- de réception par l'au moins un serveur de la part d'un utilisateur d'une demande d'accès et d'utilisation de la caractéristique biométrique de l'un de la pluralité d'items de données biométriques ;
- de communication par l'au moins un serveur à l'utilisateur demandeur des limites et des conditions d'utilisation des paramètres biométriques en fonction du contrat associé ;
- en réponse à l'acceptation par l'utilisateur demandeur des conditions d'utilisation proposées, y compris des accords et/ou des obligations, d'inscription et/ou de mise à jour des accords et des obligations existants associés.

2. Le procédé de la revendication 1 dans lequel le contrat est un contrat intelligent.

3. Le procédé de la revendication 1 ou de la revendication 2 dans lequel chaque ensemble de paramètres biométriques a été précédemment déduit d'un élément numérique de référence par le biais du traitement d'un algorithme A pour extraire l'ensemble de paramètres biométriques, l'ensemble de paramètres biométriques extraits ayant été encodé en utilisant une fonction d'encodage F qui a généré le code unique représentatif de l'ensemble de paramètres biométriques et dans lequel la demande par l'utilisateur d'accès et d'utilisation de la caractéristique biométrique de l'un de la pluralité d'items de données biométriques inclut les étapes suivantes :
- la réception par l'au moins un serveur de la part de l'utilisateur demandeur d'un élément numérique rapporté avec au moins un ensemble de paramètres biométriques enregistrés ;
- l'extraction par l'au moins un serveur d'un ensemble de paramètres biométriques de l'élément numérique rapporté en exécutant un algorithme A pour extraire un ensemble de paramètres biométriques,
- le calcul par l'au moins un serveur d'un code unique représentatif de l'ensemble de paramètres biométriques de l'élément numérique rapporté, en utilisant la fonction d'encodage F ;
- le fait de contrôler par au moins un serveur l'existence du même code unique dans l'au moins un registre privé ;
- en réponse au résultat positif du contrôle, la notification à l'utilisateur demandeur de la correspondance entre les paramètres biométriques de l'élément numérique rapporté et au moins un ensemble de paramètres biométriques enregistrés et la communication à l'utilisateur des limites et des conditions d'utilisation des paramètres biométriques en fonction du contrat associé.

4. Procédé selon l'une des revendications qui précèdent dans lequel chaque ensemble de paramètres biométriques est incorporé dans un jeton non fongible (NFT).

5. Procédé selon n'importe quelle revendication précédente dans lequel la caractéristique biométrique comprend un élément parmi : la morphologie du visage ou d'une partie du visage ; l'expression ; la voix ; le timbre vocal ; la posture ; un mouvement caractéristique ; les traits corporels, les battements cardiaques, un génome.

6. Procédé selon n'importe quelle revendication précédente, dans lequel le code unique est obtenu au moyen d'une fonction de hachage.

7. Procédé selon n'importe quelle revendication précédente, dans lequel l'étape consistant à vérifier si le code unique calculé a été précédemment enregistré inclut une vérification sur une ou plusieurs chaînes de blocs.

8. Procédé selon n'importe quelle revendication précédente, dans lequel les conditions d'utilisation de la caractéristique biométrique associée incluent un ou plusieurs éléments parmi : une licence exclusive ; une licence non exclusive ; un transfert de propriété ; une interdiction d'utiliser la caractéristique biométrique associée.

9. Procédé selon la revendication 8 dans lequel les conditions d'utilisation incluent des conditions économiques qui doivent être acceptées pour recevoir l'autorisation d'utilisation de la caractéristique biométrique associée par l'utilisateur associé de manière unique.

10. Procédé selon la revendication 8 ou la revendication 9 dans lequel l'absence de conditions d'utilisation associées à l'un de la pluralité d'items de données biométriques est à interpréter comme une interdiction d'utiliser la caractéristique biométrique associée.

11. Procédé selon n'importe quelle revendication précédente dans lequel l'au moins une chaîne de blocs inclut une chaîne de blocs privée.

12. Procédé selon n'importe quelle revendication précédente dans lequel l'au moins une chaîne de blocs inclut une chaîne de blocs publique.

13. Un programme d'ordinateur comprenant des moyens formant code numérique conçu pour effectuer les étapes du procédé selon n'importe quelle revendication précédente, lorsqu'il tourne sur un ordinateur.

14. Un système distribué comprenant un ou plusieurs composants conçus pour mettre en œuvre un procédé, selon l'une des revendications 1 à 12.
